# EUROPEAN PATENT APPLICATION

(11) **EP 2 481 329 A1**
(43) Date of publication of application: **01.08.2012**
(21) Application number: 12164328.2
(22) Date of filing: 15.05.2008
(51) Int. Cl.: A47J 31/34, A47J 31/46, A47J 31/54

(54) **Electrical appliances**

(30) Priority: 16.05.2007 GB 0709432; 21.09.2007 GB 0718521; 22.11.2007 GB 0722934
(62) Divisional of application: 08750624.2
(71) Applicant: Otter Controls Limited, Derbyshire SK17 7LF (GB)
(72) Inventor: Collinson, Michael, Stockport, Cheshire SK2 5QL (GB); Gaeta, Antonio, Buxton, Derbyshire SK17 6RA (GB); Smith, David, Macclesfield, Cheshire SK10 2UU (GB); Kloppers, Gradus Johannes, NL-7011 DN Gaanderen (NL)
(74) Representative: Cross, James Peter Archibald

(57) **Abstract**

A flow-through liquid heating apparatus comprising:
a. a heated flow path (28) arranged to heat liquid flowing therethrough
b. and depressurising means (22) downstream of the heated flow path (28) for causing a pressure difference between liquid flowing through the heated flow path (28) and liquid leaving the depressurising means (22), such that the liquid leaves the depressurising means (22) at or above boiling point, but is substantially prevented from boiling within the heated flow path (28).

## Description

The present invention relates to electrically powered liquid dispensing apparatus.

### Background to the Invention

One known form of liquid dispensing apparatus is a flow-through heater, in which water is heated on demand; see for example patent publication US-A-7151892.

Such flow-through heaters have some advantages over electric kettles, in that hot water is dispensed almost instantly, and only the required amount of water is heated.

Another form of liquid dispensing apparatus is a water cooler, in which water is cooled on demand as it is dispensed. Some forms of water dispensing apparatus include both heating and cooling options.

One problem with liquid dispensing apparatus is that liquid may remain in or behind the dispensing outlet after a first dispensing operation and be dispensed at the beginning of the next dispensing operation. This problem occurs particularly with continuous flow-through heaters, in which liquid is pumped or otherwise forced continuously through a heating portion while the liquid is dispensed. When the dispensing operation is stopped, liquid remains downstream of the heater or cooler, so is not heated or cooled as desired. Hence, particularly when only a small quantity of liquid is dispensed, that liquid is not at the required temperature.

Another problem with such remaining liquid is that it may remain in or behind the dispensing outlet for a considerable time, during which it may deposit scale. Furthermore, this remaining liquid is not sealed from the outside environment, which is unhygienic.

Another problem with liquid dispensing apparatus is that liquid is not dispensed instantly on demand, since there is a delay while the heater or cooler is energised and an initial quantity of liquid is heated from room temperature to the required temperature.

Another problem with liquid dispensing apparatus, particularly heating apparatus, is that a dispensing operation may be initiated accidentally, or by a child, thereby posing a safety risk.

Liquid dispensing apparatus may include a filter arranged to filter the liquid on demand; hence, the reservoir must be drained in order to change the filter. Another problem is that is it not easy to determine when the filter needs changing.

Currently available liquid dispensing apparatus also suffer from ergonomic problems. For example, the positioning of the dispensing outlet and drip tray restricts the size or height of receptacle into which the liquid can be dispensed. As another example, the reservoir may be located at the top of the apparatus so that the overall height of the apparatus restricts where the apparatus may be positioned or installed. As another example, a display indicating the state of the apparatus may be difficult to read, depending on the positioning of the apparatus.

In some applications, it is desirable to dispense liquid at boiling point, or as a gas (e.g. steam). For example, US 6,224,755 discloses a coffee maker in which coffee is prepared by passing steam initially through the coffee grounds, followed by hot water. This is achieved by means of a controllable outlet valve.

WO 2005/080885 A1 discloses a flow-through heater comprising a heater plate and a base structure displaceable away from the heater plate so that steam can be generated within the heater.

Heating a liquid to boiling in a flow-through heater presents various problems. For example, if water boils within a flow-through heater, scale may be deposited within the heater which will affect the efficiency of the heater or block the flow-through path altogether. Descaling of flow-through heaters is a generally inconvenient process. Another problem is that steam is a poor thermal conductor, so the heater may over-heat if steam is generated within it.

### Statement of the Invention

According to one aspect of the present invention, there is provided a flow-through liquid heating apparatus comprising:
a. a heated flow path arranged to heat liquid flowing therethrough
b. and depressurising means downstream of the heated flow path for causing a pressure difference between liquid flowing through the heated flow path and liquid leaving the depressurising means, such that the liquid leaves the depressurising means at or above boiling point, but is substantially prevented from boiling within the heated flow path.

According to another aspect of the invention, there is provided an electrically powered flow-through heater having a heating portion arranged to heat liquid flowing therethrough, means downstream of the heating portion for maintaining the liquid within the heating portion at an elevated pressure and an outlet for dispensing the liquid heated by the heater at a lower pressure, such that the liquid is dispensed at or above boiling point but boiling within the heating portion is substantially prevented.

### Brief Description of the Drawings

Embodiments of the invention will now be described with reference to the drawings identified below.
Figure 1 is a diagram of a liquid dispensing apparatus according to a first embodiment of the invention.
Figure 2 is a diagram of a liquid dispensing apparatus according to a second embodiment of the invention.
Figure 3a is a diagram of a liquid dispensing apparatus according to a third embodiment of the invention.
Figure 3b is a perspective view of the liquid dispensing apparatus according to the third embodiment.
Figure 4 is a diagram of a liquid dispensing apparatus according to a fourth embodiment of the invention.
Figure 5 is a perspective diagram of a liquid dispensing apparatus according to a fifth embodiment of the invention.
Figure 9 is a diagram of an alternative embodiment in which a liquid dispensing apparatus is plumbed into a water main.
Figure 10 is a schematic diagram of a flow-through heater and depressurising means in third to fifth embodiments of the invention.
Figure 11 is a plan view of a flow-through heater and depressurising means according to a second embodiment, in the plane D-D of Figure 12.
Figure 12 is a cross-sectional view of the flow-through heater and depressurising means of the second embodiment, in the plane C-C of Figure 11.
Figure 13 is a plan view of a flow-through heater and depressurising means according a third embodiment.
Figure 14 is a cross-section in the plane A-A of the flow-through heater of Figure 13.
Figure 15 is a partial cross-section in the plane B-B of Figure 13.
Figure 16 is a partial cross-section in the plane C-C of Figure 13.
Figure 17 is a plan view of an unheated channel plate forming part of the depressurising means of the third embodiment.
Figures 18a and 18b are respectively perspective and axial cross-sectional views of a flow-through heater and depressurising means in a fourth embodiment.
Figures 19a and 19b are respectively perspective and axial cross-sectional views of a flow-through heater and depressurising means in a fifth embodiment.

### Detailed Description of Embodiments

### Water Dispenser - First Embodiment

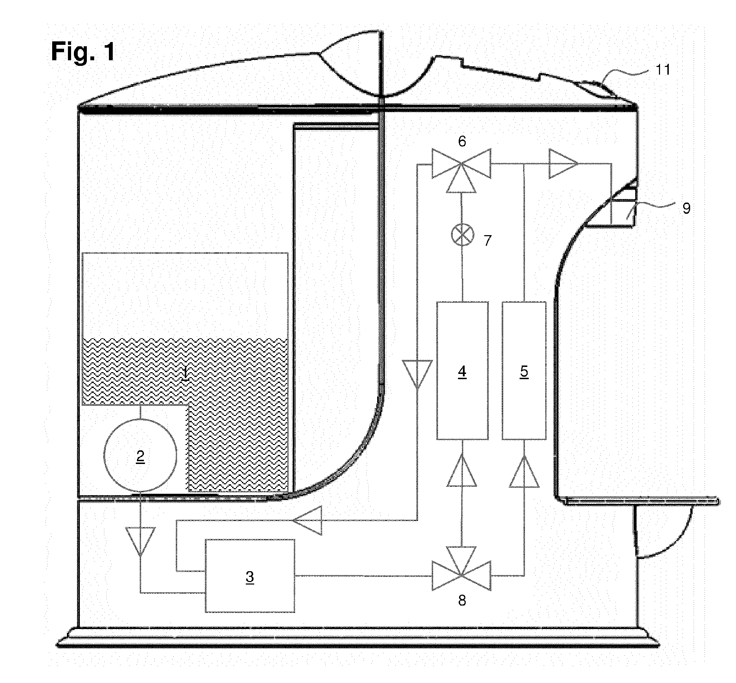

In the first embodiment shown in Figure 1, water is stored in a water reservoir 1 at the rear of the apparatus, to the left of the diagram. The reservoir 1 is preferably removable and the apparatus is arranged to inhibit dispensing unless the reservoir 1 is in place.

When a dispensing operation is initiated, for example by user actuation of a dispensing actuator 11, a pump 3 draws water from the reservoir 1 through a filter 2. The flow of water through the apparatus is controlled by first and second three-way valves 6, 8, and the direction of flow through each connection (e.g. water pipe) is shown by an arrow. Operation of the apparatus is controlled by an electrical, electronic or mechanical controller (not shown).

In a heating mode, water is drawn through a heater 4 and the temperature of water leaving the heater 4 is detected by a thermostat 7. The first three-way valve 6 is controlled so that water circulates between the pump 3 and the heater 4 until the thermostat detects that the water has reached a predetermined temperature, whereupon the water is then dispensed through an outlet 9. The heater 4 may have a variable heating rate and/or the pump 3 may have a variable flow rate, controlled in accordance with the output of the thermostat 7 so that water is dispensed at the required temperature. The heater may be substantially as described in WO 2005/080885 A1, mentioned above, or WO 2007/037694 A1.

In a cooling mode, water is drawn through a chiller 5 before it is dispensed through the outlet 9. A further thermostat may be provided in the cooling path and the chiller 5 and/or pump 3 controlled so that water is dispensed at the required temperature.

In either case, the required temperature may be fixed at the time of manufacture, or may be preset by the user.

In either mode, when the dispensing operation is completed, the pump 3 continues to operate for a short while and the first three-way valve 6 is switched over so that water remaining between the heater 4 or chiller 5 and the outlet 9 is withdrawn from the outlet 9 back towards the pump 3. When the next dispensing operation is initiated, the remaining water is circulated through the heater 4 or chiller 5 according to the mode required. The remaining water may be circulated once, or recirculated through the heater 4 or chiller 5 until it reaches the desired temperature. As a result, the water is dispensed at the required temperature from the beginning of the dispensing operation.

In an alternative embodiment, the remaining water may be evacuated from the apparatus rather than being recirculated. For example, the flow arrangement may include an air valve that allows air into the vicinity of the outlet 9 at the end of the dispensing operation, so that the remaining water flows out through the outlet 9 or through a waste outlet (not shown). Preferably, the evacuation is controlled automatically by the controller. For example, when the dispensing operation is completed, the controller may open the air valve immediately so that the remaining water flows through the outlet 9 and is therefore dispensed as part of the dispensing operation. Alternatively, the controller may delay the evacuation by a predetermined interval, so that if there is no further dispensing operation during that interval, the evacuation then takes place automatically. The remaining water may then be evacuated into a drip tray under the outlet 9. Alternatively, the controller may sense the temperature of the remaining liquid, and evacuate it when the temperature diverges by a predetermined extent from the desired temperature.

The controller may be programmed with one or more control programs arranged to provide the operations of the controller described herein. The control program(s) may be provided as a computer program product. The controller may be reprogrammable via an external interface accessible to a service engineer, or to the user.

In an alternative embodiment, the heater 4 and/or chiller 5 may be positioned immediately behind the outlet 9, such that the volume of remaining water is very slight and no recirculation or evacuation thereof is required.

In an alternative embodiment, a small auxiliary heater may be provided around the outlet 9 to keep the remaining water warm between dispensing operations; the heater may be a trace heater, preferably a self-regulating trace heater.

The filter 2 may be designed so as to soften the water, for example by removing calcium and/or magnesium ions. Advantageously, this may prevent or reduce the buildup of scale within the liquid dispensing apparatus. The filter 2 may alternatively or additionally be designed to improve the taste of the water, for example by removing chlorine. The filter 2 may alternatively or additionally be designed to purify the water, for example by filtering out suspended particles and/or organisms.

As an alternative to a filter, other means of achieving any of the above effects may be used, such as a UV sterilizer for purifying the water.

As an alternative to the pump 3, there may be provided other means for causing the liquid to flow through the heater 4 or chiller 5 and out of the outlet 9. For example, the bottom of the reservoir 1 may be raised sufficiently that the liquid is driven through the apparatus by the head of liquid. Alternatively, the reservoir 1 may be pressurised, for example by a gas cylinder or a pump actuable to raise the pressure within the reservoir 1, or by means of exerting pressure on or within the boundary of the reservoir such as to reduce the volume of the reservoir and thereby increase the pressure therein, such as an elastic wall or diaphragm.

### Water Dispenser - Second Embodiment

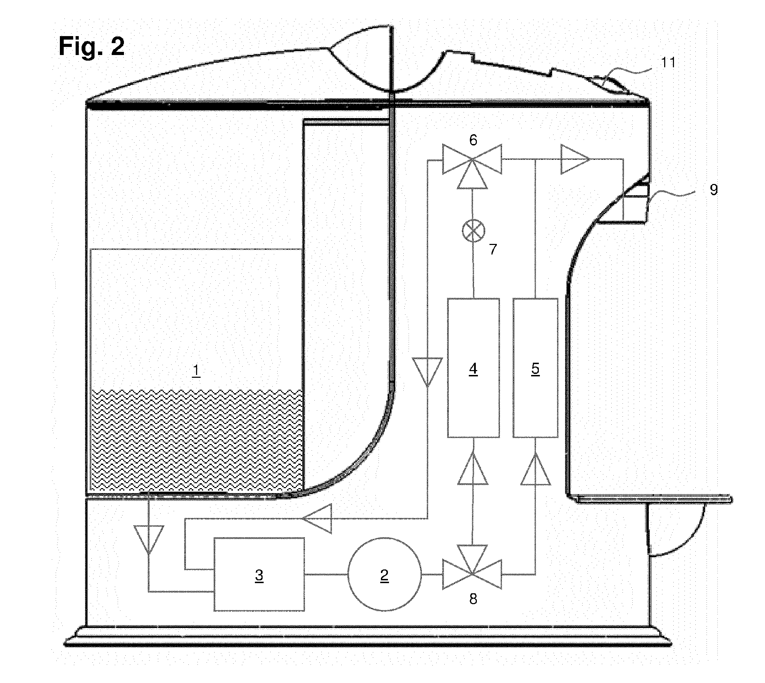

The second embodiment, as shown in Figure 2, differs from the first embodiment in that the filter 2 is positioned outside the reservoir 1, and in this example downstream of the pump 3, before the second three-way valve 8. In this way, the filter 2 can be made accessible from a 'dry' area of the apparatus, so that the filter 2 can be changed without emptying the reservoir 1. For example, the filter 2 may be removable from one side of the apparatus. A further advantage is that the filter 2 does not occupy space within the reservoir 1, which therefore has a larger capacity for a given overall size.

Advantageously, purifying means that use radiation, such as a UV sterilizer, may be positioned downstream of the reservoir 1, and may be shielded within the apparatus to reduce the risk of a user being exposed to potentially harmful radiation.

In a variant of the second embodiment, there may be provided an additional flow path that selectively bypasses the filter 2, thus allowing the user the option to dispense unfiltered water.

The speed of the pump 3 may be reduced so that water of low quality can be filtered or sterilized more effectively. Alternatively, water may be recirculated through the filter 2, or selectively circulated through a second filter (not shown).

### Water Dispenser - Third Embodiment

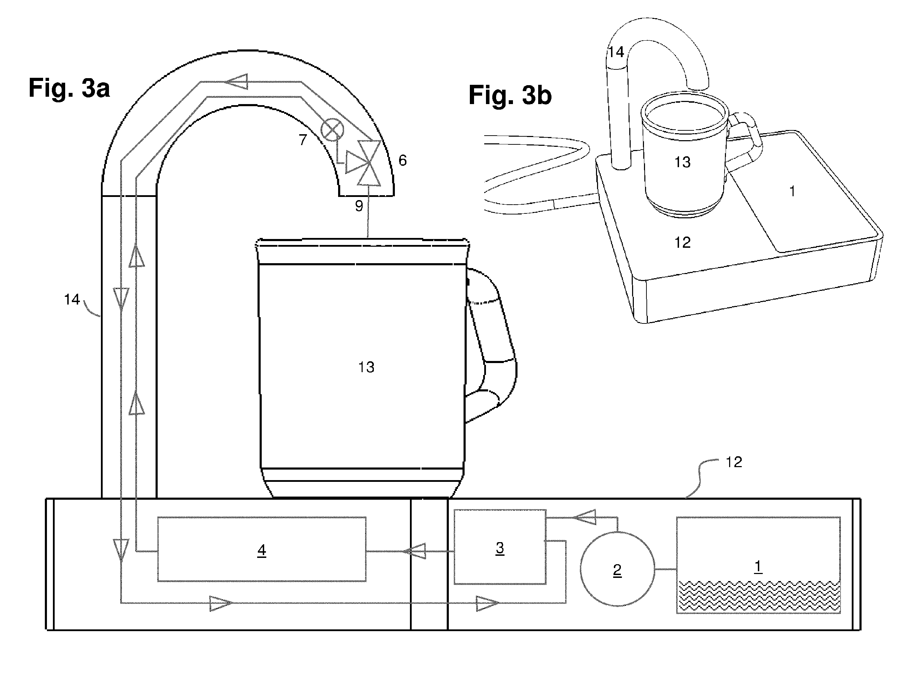

Figures 3a and 3b show a third embodiment of the invention, which differs from the first and second embodiments in that the reservoir 1, filter 2, pump 3 and heater 4 are housed in a base 12 on which a receptacle 13 rests to receive the dispensed heated water. The first three-way valve 6, thermostat 7 and outlet 9 are located at the end of a tap or spout 14. In this way, the height of the apparatus is much reduced although, as shown in Figure 3b, the footprint is somewhat increased.

The internal flow arrangement in the third embodiment is similar to that of the first embodiment, except that there is no chiller 5 and hence no need for the second three-way valve 8. Moreover, the filter 2 is positioned outside the reservoir 1 and can therefore be replaced without emptying the reservoir 1.

In this embodiment, the heater 4 is mounted horizontally rather than vertically as in the first and second embodiments; however, in other embodiments the heater 4 may be mounted in other orientations.

### Water Dispenser - Fourth Embodiment

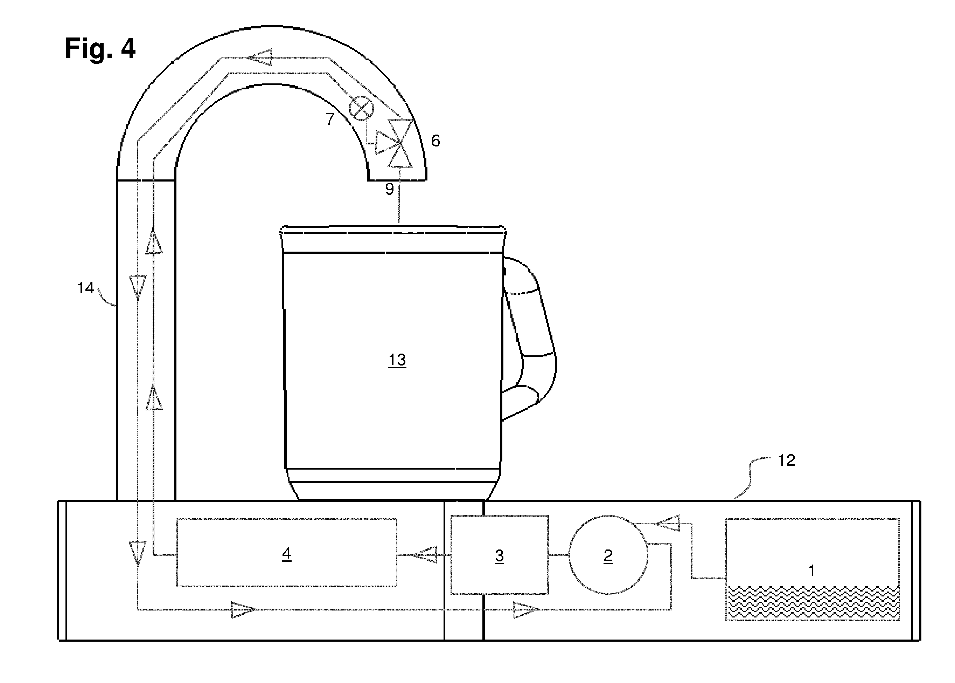

The fourth embodiment, as shown in Figure 4, differs from the third embodiment in that the internal flow arrangement allows water to be recirculated through the filter 2. Hence, the remaining water is filtered before being reheated during the next dispensing operation. This may reduce problems of hygiene with the remaining water.

### Water Dispenser - Fifth Embodiment

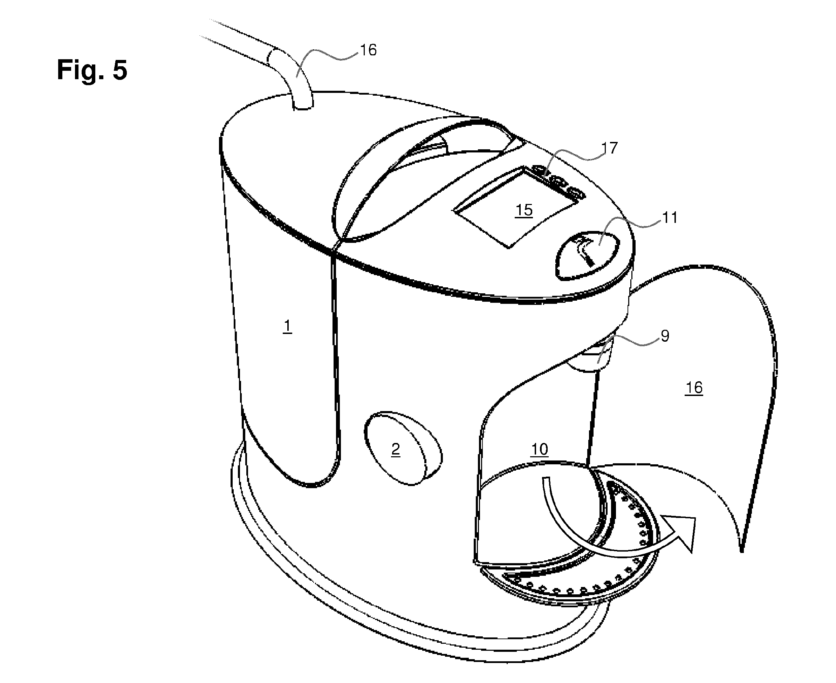

The fifth embodiment, as shown in Figure 5, is a development of the second embodiment in which the filter 2 is provided as a removable cartridge accessible from the side of the apparatus. It can therefore be changed without the user getting his or her hands wet by accessing the inside of the reservoir 1, or requiring the reservoir 1 to be emptied. Other features of the fifth embodiment, as described below, may also be applied to the first embodiment, or other embodiments.

### Mains Connection

The reservoir 1 is fillable through a hose 16, which may be connected to a water main. There may be provided within the reservoir 1 a valve for refilling the reservoir 1 from the hose 16 when the water level within the reservoir falls below a minimum level.

### Status Indication

The apparatus includes a control panel 15 comprising a display, such as an LCD, for displaying the status of the apparatus, for example one or more of the following:
- the estimated remaining life of the filter 2
- whether the apparatus is in heating or cooling mode
- whether the water level in the reservoir 1 is below a minimum level
- the number of dispensing operations since a predetermined event, such as descaling
- the volume of liquid dispensed, either during the current operation, the previous operation, or the total volume dispensed since a predetermined event.
- the estimated time to dispense a predetermined volume of liquid, given the current operating parameters of the apparatus
- Pre set temperature setting
- Altitude setting
- Drip tray full
- Status of additive(s)
- Fault mode - to prompt user action and/or servicing
- Steam mode (see further embodiments below)

Alternatively or additionally, status information may be indicated audibly, such as:
- an audible warning to change the filter 2
- an audible indication of whether the apparatus is in heating or cooling mode
- an audible warning that the water level in the reservoir 1 is below a minimum level
- an audible warning that descaling is required
- an audible indication of the volume of water dispensed during the current operation, such as a rising or falling tone as water is dispensed.

Alternatively or additionally, status information may be indicated by a lighting effect, such as:
- a visual warning to change the filter 2
- a visual indication of whether the apparatus is in heating or cooling mode
- a visual warning that the water level in the reservoir 1 is below a minimum level
- a visual warning that descaling is required
- a visual indication of the volume of water dispensed during the current operation, such as a lighting effect that changes colour (e.g. from green to red) and/or intensity as water is dispensed.

Lighting effects may be provided by illumination of the dispensing area 10, the reservoir 1 and/or other parts of the apparatus. Preferably, the lighting effect is provided in the area to which the indication relates, for example:
- illumination of the dispensing area 10 to indicate whether the apparatus is in heating or cooling mode (e.g. red for heating, blue for cooling)
- illumination of the reservoir 1 to indicate whether the water level is below a minimum level (e.g. green for above the level, red for below)
- illumination in or around the filter 2 to indicate that the filter 2 needs changing.

Alternatively, the lighting effect may be provided in an area most likely to attract the user's attention, such as an indication in the dispensing area 10 that the water level in the reservoir 1 is below the minimum.

### Safety Features

The dispensing area 10 includes a movable door 16, and the apparatus is arranged to operate only when the door 16 is closed and a receptacle 13 is detected in the dispensing area, for example by a microswitch. The door 16 may be hinged, or form part of a turntable on which the receptacle is supported. Rotation of the turntable rotates the door 16 into a closed position.

### User Control

The apparatus may also include one or more user operable controls, such as buttons 17, that allow additional control of the apparatus by the user. For example, the user may select a predetermined quantity of liquid to be dispensed, such as a cup-, mug- or jugfull. The user control may have a 'learning mode', whereby a user keeps a button pressed until the required volume of liquid is dispensed. When the button is released, the quantity of liquid dispensed is stored in a memory within the control and may be assigned to a preset control by the user.

The control may include a timer, so that the user may set the apparatus to dispense liquid at a predetermined time or after a predetermined interval.

The user operable control may implement one or more safety features. For example, the apparatus may include a safety lock whereby the dispensing actuator 11 is disabled. The safety lock may only be removed by pressing a predetermined combination of the control buttons 17. The predetermined combination may be variable e.g. programmable by a parent. Alternatively, the apparatus may be provided with a biometric sensor, such as a fingerprint sensor provided in the dispensing actuator 11, such that a dispensing operation may only be initiated by a recognised person pre-programmed into the apparatus.

### Additive

The apparatus may include one or more separate reservoirs for additives, which may be beverage ingredients such as a cordial or squash concentrate or instant tea or coffee powder. WO 2008/139205 A2 discloses various arrangements, in which additives may be dispensed with the water.

### Storage

The housing of the apparatus may include a storage area for storing tea, coffee, sugar and/or other beverage ingredients for addition to the water after dispensing. WO 2008/139205 A2 discloses an apparatus that may include a pull-out storage drawer/compartment towards the base, around the dispensing area.

### Dispensing arrangements

The dispensing actuator 11 may be provided around the outlet 9 within the dispensing area, so that a dispensing operation may be initiated by pressing the receptacle 13 up against the dispensing actuator 11. This allows a quick one-handed dispensing operation. Alternatively, the dispensing actuator may comprise a detector within the dispensing area 10, that detects the presence of the receptacle 13.

The dispensing area 10 may include a drip tray. The drip tray may be stowed in the dispensing area when not in use. The drip tray may be removable and storable in the reservoir 1 for transportation. The drip tray may include a float switch so that the apparatus can detect and indicate to the user when the drip tray is full. Alternatively, the drip tray may include a float that provides a direct visual indication that the drip tray is full.

WO 2008/139205 A2 discloses embodiments of the outlet, for example the outlet may be adjustable in height and/or angle so that a receptacle fits under the outlet without the outlet being too high above the top of the receptacle, thus minimizing the risk of splashing and Figure 6 of WO 2008/139205 A2 illustrates the outlet being provided on a moveable arm.

### Rotatable Display

The above embodiments may include an additional feature in which the control panel is rotatably mounted on the main body of the apparatus. WO 2008/139205 A2, in which this application is based, discloses a rotatable control panel so that the display is oriented correctly towards the user.

### Pre-heated Reservoir

In the above embodiments, the reservoir 1 contains water at ambient temperature. Alternatively, the reservoir 1 may include a heater and thermostat for pre-heating the water to a predetermined temperature lower than the desired dispensing temperature. For example, the pre-heating temperature may be 40°C for a dispensing temperature of 95°C. Advantageously, pre-heating the water reduces the time taken to heat the water up to dispensing temperature on demand. In addition, preheating the water increases the flow rate at the dispensing temperature. Preferably, the pre-heating temperature is significantly lower than the dispensing temperature, for energy efficiency. Alternatively, the pre-heating temperature may be sufficiently high for making beverages of certain types, such as 80°C which is suitable for making coffee or reconstituting packet soups and the like. Preferably, the reservoir 1 is thermally insulated to reduce the energy required to maintain the water at the pre-heating temperature.

The heater for pre-heating the reservoir may comprise an immersed or under-floor heater. The heater may comprise a sheathed heating element, a thick film heating element and/or a light-emitting element such as a halogen heater. The light-emitting element may provide an automatic indication of the heating of the reservoir 1, and preferably is arranged to illuminate the liquid within the reservoir.

As an alternative, the heater 4 may be used to pre-heat the water in the reservoir 1; the flow arrangement includes an outlet from the heater 4 to the reservoir 1, and the water is circulated through the reservoir until it reaches the required temperature, as detected by the thermostat 7.

One application of this embodiment is in a Turkish teamaker, comprising a hot water reservoir 1 and a brewing container, such as a teapot; typically, the brewing container is kept warm by being positioned above the hot water reservoir 1. In a further development, however, the hot water may be circulated through a warming circuit in direct thermal contact with the brewing container, such as around or under the brewing container. When water is dispensed from the heated reservoir, the flow of hot water may be switched away from the warming circuit and towards the outlet 9.

### Flow-through Heater Kettle

As another alternative, the reservoir 1 may be used as a kettle, so that no dispensing outlet 9 is required. Water is circulated through the heater 4 until the desired temperature is reached, and the reservoir 1 is then removed and the heated water poured directly from it. The input to and output from the reservoir 1 may each include a valve so that water does not leak from the reservoir 1 when removed from the apparatus, although the input to the reservoir 1 may be provided above the maximum water level, in which case no valve is required.

This arrangement may reduce the noise often associated with kettles having heating elements located within the water reservoir. Moreover, the arrangement provides greater design freedom than conventional kettles. For example, the reservoir 1 itself need contain very few parts, and may be easily washable.

Where the heater 4 and thermostat 7 are arranged to heat the water to boiling, the heater 4 is preferably located downstream of the pump 3, to avoid boiling within the pump 3, which would reduce efficiency.

### Flow-through Sterilizer

As the liquid passes through the heater 4, it is heated to a high temperature which may be sufficient to sterilize the liquid. However, as the liquid is then recirculated into the reservoir 1, it is mixed with unsterilized liquid and the effect of sterilization is lost. In the flow-through heater kettle described above, the liquid may eventually be sterilized if the contents of the reservoir 1 are brought to boiling point and boiled for an extended period, such as a minute or more.

In an alternative embodiment, liquid is not recirculated to the reservoir but is instead passed into a secondary reservoir prior to dispensing. Liquid contained in the secondary reservoir has all passed through the heater 4 and may therefore be sterilized. The liquid in the secondary reservoir may be maintained at a predetermined temperature prior to dispensing, for example by a keep warm heater. Alternatively, the liquid may be allowed to cool within the secondary reservoir and dispensed at ambient temperature, or chilled prior to dispensing.

### Interchangeable Reservoirs

In a further embodiment (not shown), the reservoir 1 may be interchangeable, for example with a bottle holder for supporting a large bottle forming the reservoir. Figures 8a and 8b of WO 2008/139205 A2, in which this application is based, illustrates various types of reservoir arrangements.

### Water Main Connection

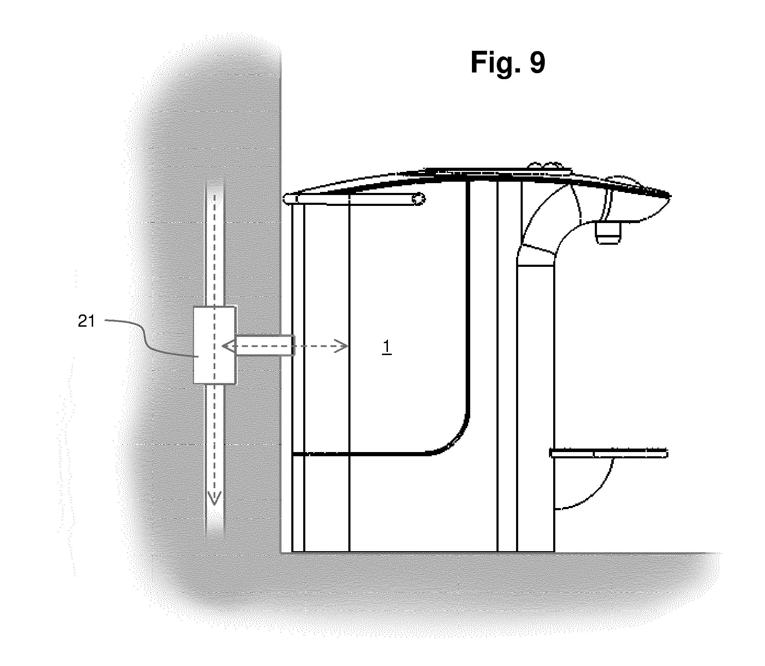

As shown in Figure 9, in an alternative embodiment the reservoir 1 may be connected to a water main 21 by means of a permanent connection, instead of by the hose 16. Alternatively, in some embodiments water may be supplied directly from the water main 21 without the intermediate reservoir 1. In this case, the mains pressure may be sufficient to force the water through the apparatus, without the need for the pump 3 or other pressurizing means. Either arrangement may be used in 'point of use' applications.

### Flow-through heater with Depressurising means

A flow-through heater suitable for supplying boiling water or steam (or, more generally, boiling liquid or gas) will now be described. It is generally know that the boiling point of a liquid increases with pressure; the following embodiments of a flow-through heater make use of this dependence to dispense boiling water and/or steam while substantially preventing boiling within the heated portion of the flow-through heater. Water within the heated portion of the flow-through heater is maintained at a pressure elevated above ambient pressure, and is dispensed at a lower pressure, such as ambient pressure, either as boiling water or steam.

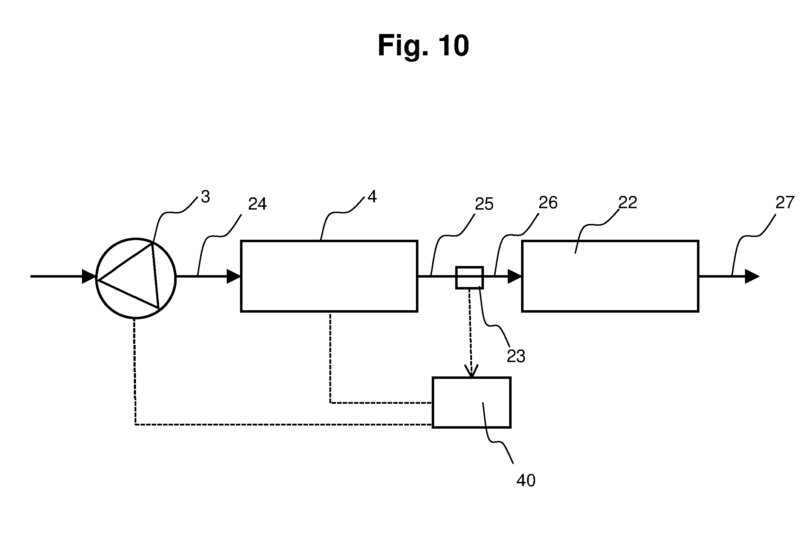

A schematic diagram of the arrangement of the flow-through heater is shown in Figure 10, in which a pump 3 pumps water at elevated pressure into the inlet 24 of flow-through heater 4; a temperature sensor 23 at the outlet 25 of the heater 4 provides an input to a controller 40 arranged to control the speed of the pump 3 and/or the heating power of the heater 4 so as to maintain a predetermined temperature at the outlet 25. Water passing out of the heater 4 flows through a depressurising means 22 arranged to maintain a pressure difference between the inlet 26 and outlet 27 thereof; the outlet may be at ambient pressure. The controller 40 may also control the depressurising means 22 so as to vary the pressure drop over it.

The pressure difference over the depressurising means 22 and the temperature at the outlet 25 of the heater 4 are such as substantially to prevent boiling within the flow-through heater 4, while allowing boiling water and/or steam to be dispensed at the outlet. Preferably, the pressure difference is at least 0.2 bar, and most preferably at least 0.4 bar. In one example, the temperature at the outlet 25 of the heater 4 is maintained at approximately 104°C and the pressure at the outlet 25 of the heater 4 at approximately 1.4 bar, where the outlet 27 of the depressurising means 22 is at 1 bar. Hence, water will not boil until it passes through the depressurising means 22.

The pressure at the outlet 27 may vary, for example with variations in barometric pressure caused by changing weather conditions or height above sea level. The pump 3 and/or heater 4 and/or depressurising means 22 may be controlled to compensate for the variations so as to achieve a consistent output at the outlet 27, such as water that is always just at boiling point. The compensation may be performed manually, or automatically by sensing atmospheric pressure, or deriving it using local GPS data for example.

Instead of the pump 3, alternative pressurizing means may be used as explained above with reference to the previous embodiments.

The heater 4 may be a flow-through heater substantially as described in WO 2007/037694 A1, or as in the embodiments of WO 2005/080885 A1 that do not allow boiling within the heater 4.

In a first embodiment, the depressurising means 22 comprises an overpressure or pressure release valve. The valve is designed to open when a pressure greater than a predetermined threshold is applied across it. For the above example, the threshold may be 0.4 bar. Hence, the water boils as it is dispensed through the valve. As an alternative to a valve, a fine nozzle could be used as the depressurising means 22.

The valve or nozzle may be adjustable such that the pressure drop across it is variable. This is turn varies the temperature at which the water leaves the valve or nozzle. The adjustment may be made manually, or automatically under the control of the controller 40; this provides an alternative or additional means of controlling the temperature and/or flow rate of the water.

However, the use of a valve or nozzle as the depressurising means 22 may lead to problems. For example, the valve or nozzle may become clogged with scale. Also, the valve may provide an intermittent pressure release, as the pressure difference rises above the threshold and then falls below it as the valve opens; dispensing may not be even, and the valve may emit sudden bursts of boiling water or steam.

To overcome these problems, in the following embodiments the depressurising means 22 comprises a substantially unheated flow path arranged downstream of the heater 4. The unheated flow path provides resistance to the flow of water so that the pressure of the water drops gradually as it passes along the unheated flow path. Hence, the water gradually begins to boil as it passes along the unheated flow path and the boiling water or steam may be dispensed smoothly.

Since boiling takes place in the unheated portion of the flow path, scale tends not to adhere to the flow path, but is purged with the boiling water. The unheated flow path may include material that inhibits scale formation, such as polypropylene.

The unheated flow path may be comparatively long, narrow and/or convoluted so as to provide the necessary degree of resistance. Alternatively, the unheated flow path may comprise a component that presents a high resistance to water flow, such as a filter or a chamber or pod containing finely comminuted and/or tightly packed beverage ingredients, such as finely ground tea leaves or coffee grounds, or powdered beverage. The latter alternative is preferred for beverages that tolerate being heated to boiling, such as tea.

The unheated flow path may comprise a part of an appliance in which the flow-through heater 4 is used, and need not be integrated or supplied as a unitary component with the flow-through heater 4. For example, the unheated flow path may comprise part of an appliance as described above with reference to Figures 1 to 9. Where water at a sub-boiling temperature is desired, the depressurising means 22 may be switched out of the flow path, to allow higher flow rates or to avoid the problem of unheated water being retained downstream of the heater 4 after a dispensing operation, as described above. In other words, water may be selectively dispensed directly from the outlet 25, or from the outlet 27.

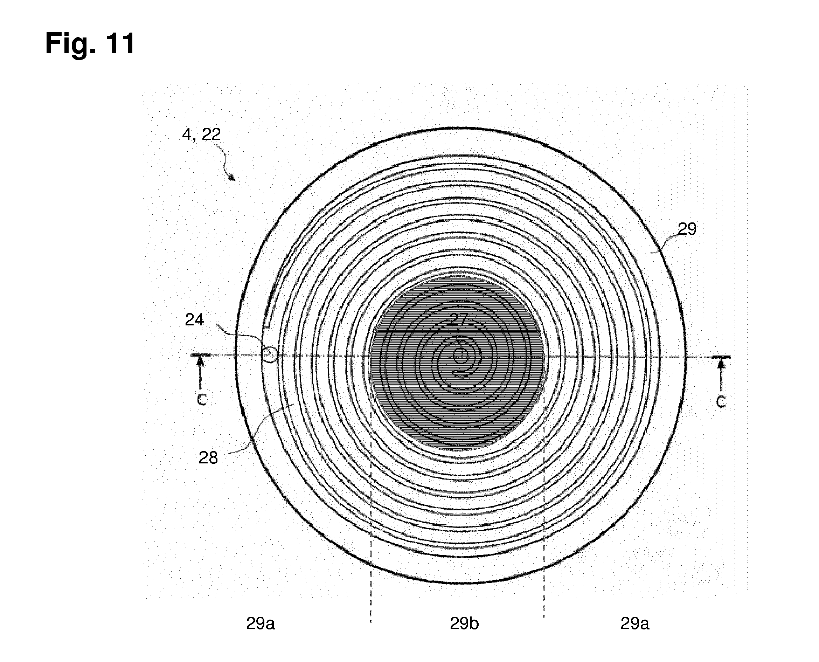

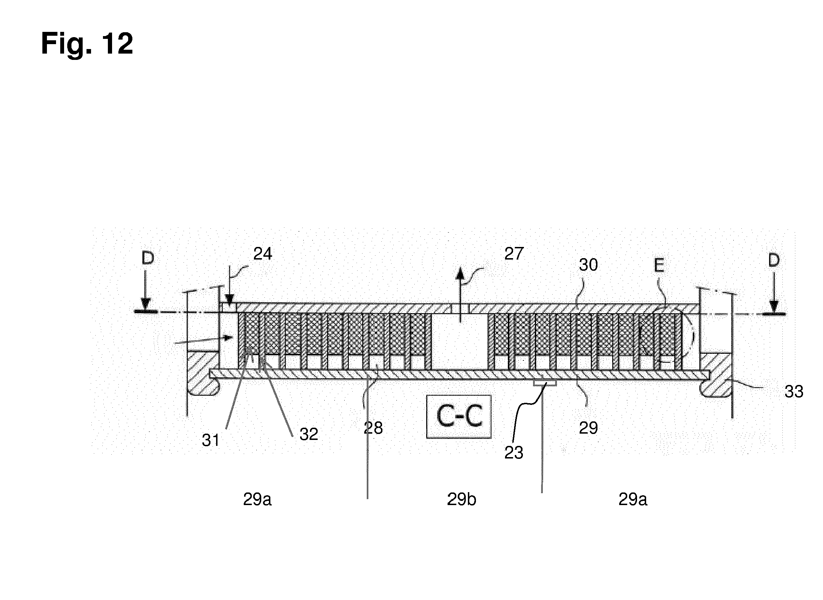

A second embodiment, as shown in Figures 11 and 12, is based on a spiral flow-through heater as disclosed in WO 2005/080885 A1. Water enters the inlet 24 of a spiral flow path 28, along which the water passes over an element plate 29 and emerges through a central outlet 27. The element plate 29 has a heated radially outer portion 29a and an unheated radially inner or central portion 29b. In this way, a radially outer section of the flow path 28 passing over the heated portion 29a functions as the heater 4, and a radially inner section of the flow path 28 passing over the unheated portion 29b functions as the depressurising means 22. Preferably, the temperature sensor 23 is provided at the boundary between the heated portion 29a and the unheated portion 29b; for example, as shown in Figure 12, the sensor 23 may be mounted on the underside of the element plate 29, or alternatively, on the upper side of the element plate 29 or in another position within the flow path 28. The sensor 23 may be an NTC thermistor.

The element plate 29 is preferably a thick film element plate; the radially outer portion 29a is provided with thick film heating tracks, while the radially inner portion 29b may be substantially free of thick film heating tracks, or be provided with heating tracks or some other heating means which are independently switchable from those in the radially outer portion. Alternatively, the element plate 29 may be provided with a sheathed heater under the radially outer portion, and means to inhibit heat diffusion into the radially inner portion 29b. For example, a heat diffuser provided under the radially outer portion 29a does not extend under the radially inner portion 29b.

As shown in Figure 12, the flow path 28 may be formed by spiral-wound strips 31 and 32 held between the element plate 29 and a base plate 30, such that the strip 31 forms the side walls of the flow path 28, the element plate 29 forms the bottom, and the strip 32 forms the top. The element plate 29 and base plate 30 are held within a housing 33, which is arranged to press the element plate 29 and base plate 30 together and to seal their peripheries, to provide a watertight seal between the strip 31 and the element plate 29. Biasing means may be provided within the housing to achieve this pressure. For example, there may be provided a spring member between the base plate 30 and the housing 33, to bias the base plate 30 towards the element plate 29.

The strip 32 maintains the winding spacing of the strip 31, and may be secured against the base plate 30. Preferably, the strips 31 and 32 are of flexible material and are mounted to allow for thermal expansion of the heating element 29. Either or both of the strips 31 and 32 may be of thermally conductive material, such as metal, or plastic. As an alternative to the strip 32, there may be provided a rigid or flexible matrix that holds the strip 31 in position. The matrix may be of metal or plastic. Alternatively, the base plate 30 and strips 31 and 32 may be replaced by an integrated channel plate 34, which is formed of a material such as metal or plastic so as to define the inlet 24, flow path 28 and outlet 27, and is pressed against the element plate 29 so as to close the underside of the flow path 28.

The flow path 28 may be formed by various alternative methods, including die casting, injection moulding, brazing, welding, pressing and the like. For high pressure applications, the strip 31 may be immovably sealed against the element plate 29 and/or the base plate 30, for example by welding, brazing or soldering.

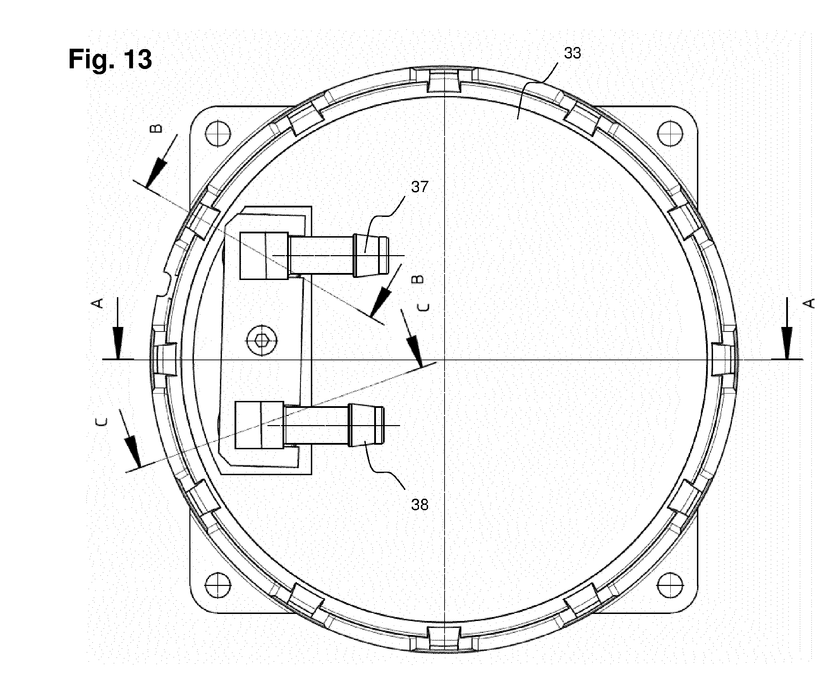

A third embodiment, as shown in Figures 13 to 17, uses substantially all of the area of the element plate 29 for heating, but includes an unheated flow path displaced from the element plate 29. The heated flow path and the unheated flow path are arranged in displaced, parallel planes, contained within a common housing.

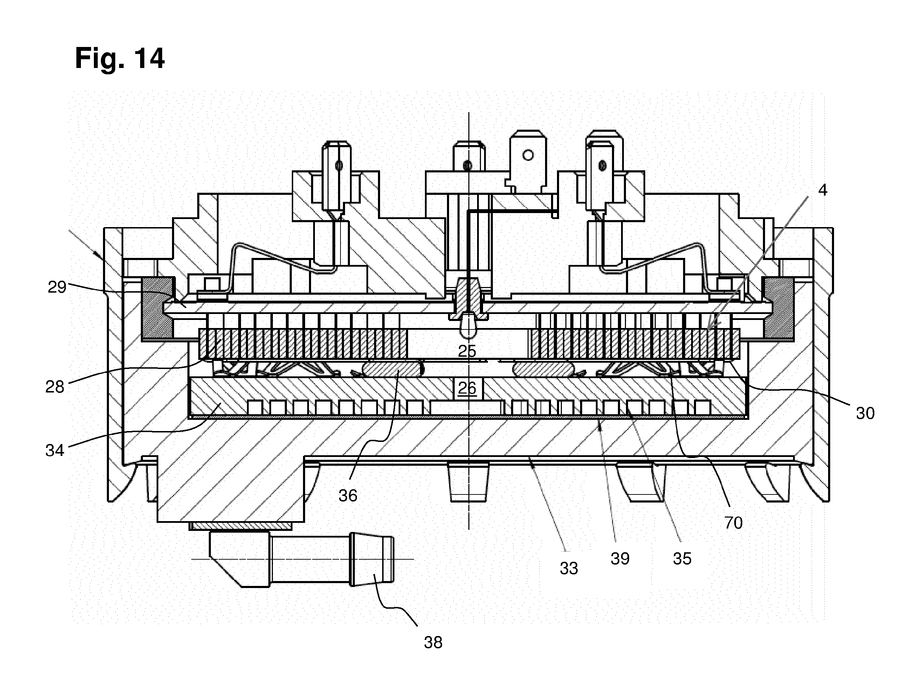

As shown most clearly in Figure 14, the third embodiment includes a spiral-wound flow-through heater 4 similar to the second embodiment, except that the radially inner portion 29b of the element plate 29 is heated, and hence is also similar to the flow-through heater disclosed in WO 2005/080885 A1. However, water flowing through the central outlet 25 of the flow-through heater 4 flows into a central inlet 26 of an unheated channel plate 34, through a connection that is made water-tight and pressure-resistant by a seal 36, such as an O-ring

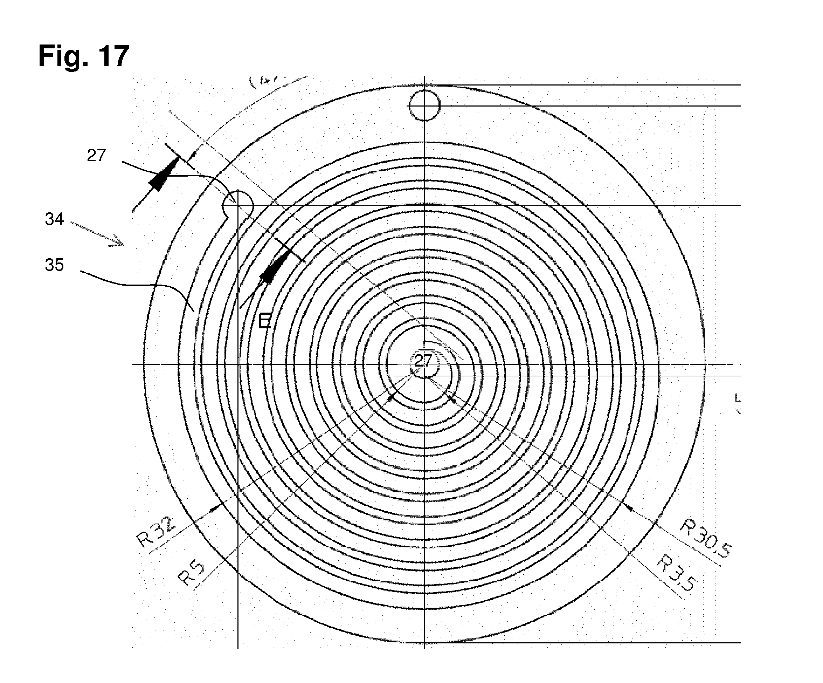

The unheated channel plate 34, as shown in Figure 17, defines a spiral flow path 35 that leads from a central inlet 26 to a peripheral outlet 27. The spiral flow path 35 is dimensioned so as to provide sufficient resistance so as to constitute the depressurising means 22 in this embodiment. The flow-through heater 4 and unheated channel plate 34 are held together within a housing 33. A spring 70 is provided between the base plate 30 and the channel plate 34, so as to bias the base plate 30 towards the element plate 29, and the channel plate 34 towards the housing 33. A seal, sealing sheet or diaphragm 39, made for example of rubber, may be provided between the channel plate 34 and the housing 33, to seal against the outer face of the unheated channel plate 34 and thereby to form one side of the spiral flow path 35. Alternatively, a spring may be provided between the diaphragm 39 and the housing 33. Alternatively, the unheated channel plate 34 may seal directly against the housing 33. Alternatively, the spiral flow path 35 may be formed within the housing 33, or defined by the shape of a part of the housing 33 that seals against the base plate 30 of the flow-through heater 4.

In an alternative embodiment, the unheated channel plate 34 may be spaced apart or otherwise thermally insulated from the flow-through heater 4, to avoid heating of the unheated channel plate 34. The thermal insulation may be provided by an additional diaphragm, seal and/or spacer, for example against or forming part of the base plate 30.

There may be provided a diaphragm between the flow path 28 and the unheated flow path so as to reduce the pressure in the unheated flow path by the Venturi effect.

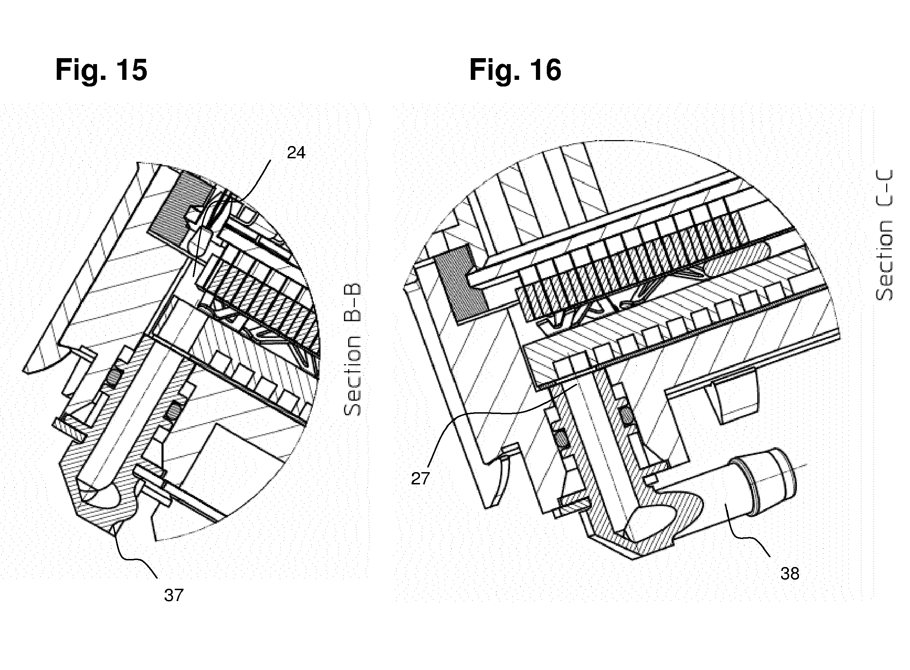

The housing includes an inlet port 37 arranged to convey water to the inlet 24 as shown in Figure 15, and an outlet port 38, arranged to convey boiling water and/or steam from the outlet 27, as shown in Figure 16. Since both the inlet 24 and the outlet 27 are at the periphery of the heater 4 and unheated channel plate 34 respectively, the inlet and outlet ports 37 and 38 may also be arranged at the periphery of the housing 33, which allows the complete assembly to be constructed with a low profile.

In certain applications it will be necessary for the decompression tube to flow directly over the heating element and these may be sealed by a diaphragm to overcome thermal expansion and contraction issues.

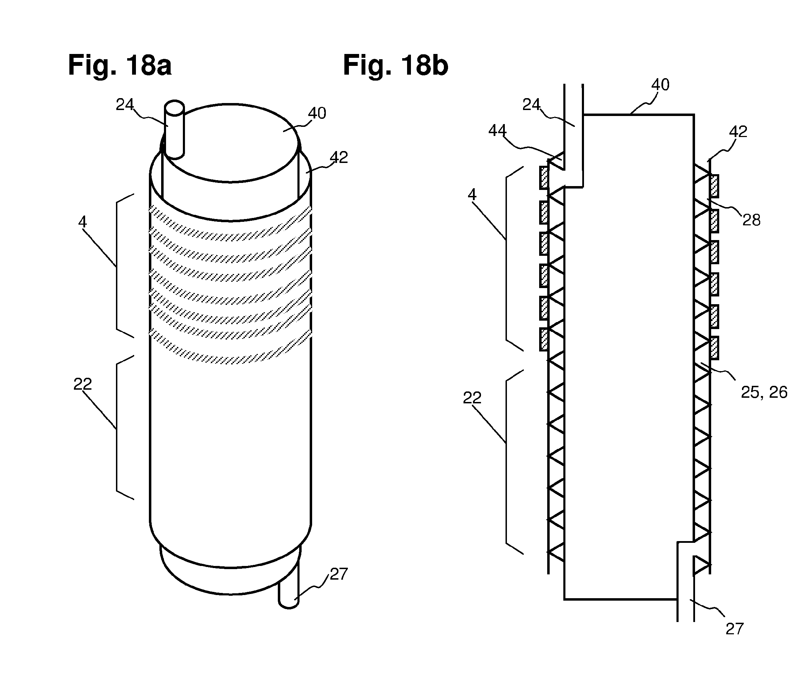

In a fourth embodiment, shown in Figures 18a and 18b, the flow-through heater comprises a cylindrical inner body 40 having a helical projection 44 on the outer surface thereof. A thermally conductive outer cylindrical sleeve 42 is formed or fitted around the inner body 40 so as to contact the helical projection 44 and thereby form a helical flow path 28 between the inlet 24 and the outlet 27. This flow path 28 is substantially longer than the inner body 40 or the sleeve 42.

Adjacent an upstream section of the helical flow path, a thick film heater 4 is formed on the outer surface of the sleeve 42, so that the upstream section of the flow path 28 is heated. The remaining surface of the sleeve 42 is not heated, so that a downstream portion of the helical path 28 is unheated and thereby forms the depressurising means 22 in this embodiment.

The sleeve 42 may be formed of metal, such as stainless steel, having an electrically insulating layer onto which the thick film heating tracks are deposited, or of ceramic material onto which the tracks are deposited directly. Advantageously, the material on which the heater 4 is formed should have a low adherence of scale, high strength, low heat capacity and high thermal conductivity, such as titanium, aluminium, copper, stainless steel, or ceramic. The inner body 40 may be formed of a material having high strength, low heat capacity, low thermal conductivity and low scale adherence. Liquid-facing surfaces may be coated with a material that inhibits scale formation.

The helical projection 44 may be formed integrally with the inner body 40, for example by hydroforming or moulding. Alternatively, the helical path 28 may be formed by a groove or recess in the cylindrical sleeve 44 and/or the inner body 40. Alternatively, the helical projection 44 may be formed by a wire wound around the inner body 40 or fixed to the inner surface of the outer sleeve 42. Alternatively, the helical path 28 may be formed by a cylindrical channel structure placed between the sleeve 42 and the inner body 40, analogous to the channel plate 34 in the third embodiment. The channel structure may be compressed between the sleeve 42 and the inner body 40, for example by constructing the inner body 40 of resilient material and fitting an expandable member within the inner body 40.

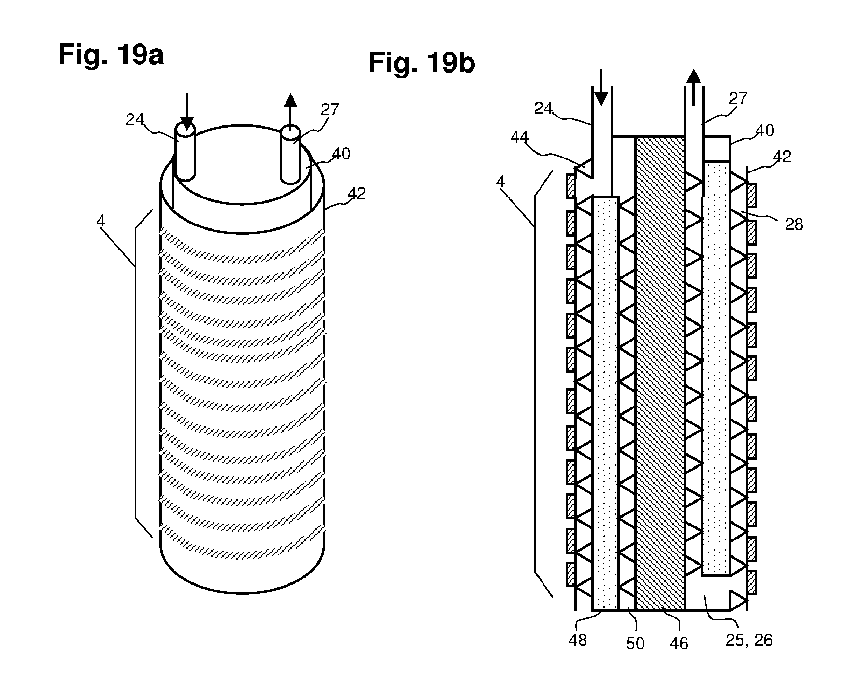

A fifth embodiment, shown in Figures 19a and 19b, differs from the fourth embodiment in that the heater 4 covers substantially all of the outer surface of the cylindrical sleeve 42 substantially all of the helical path 28 is heated. The depressurising means 22 in this embodiment comprises an unheated helical flow path 50 formed around a central cylindrical body 46 within the inner body 40. The inner wall of the inner body 40 is provided with an insulating layer 48, or is formed of thermally insulating material, so as to reduce heat transfer between the heated flow path 28 and the unheated flow path 50.

Hence, water passes through the inlet 24, along the heated helical flow path 28 between the outer sleeve 42 and the inner body 40, and then passes into the inner body 40 to flow along the unheated helical flow path 50 between the central body 46 and the inner body 40, emerging from the outlet 27 at the same end of the flow-through heater as the inlet 24. The fifth embodiment provides a particularly compact arrangement, in circumstances where a cylindrical form of flow-through heater is preferred.

In a modification of the fifth embodiment, an outlet port may be provided at the outlet 25 of the heated flow path 28, together with a three-way valve switchable between a first position in which water flow out of the outlet port from the heated flow path 28, and a second position in which the water continues into the unheated flow path 50.

The heater 4 may alternatively be a sheathed element heater or heating wire wound around the sleeve 42. The heater may alternatively be provided in or around the central body 46 and the functions of the flow path 28 and the flow path 50 are reversed, as is the flow direction of the water.

In the fourth and fifth embodiments described above, the outer sleeve 42 and inner body 40 are right circular cylindrical, but other types of cylindrical shapes may be used.

The helical flow path 28 and/or 50 may include baffles or projections perpendicular to the flow path to promote turbulent flow. The flow path 28 and/or 50 may have a convoluted shape other than a helical shape. As an alternative, there may be provided a narrow cylindrical gap between the sleeve 42 and the inner body 40 or between the inner body 40 and the central body 46. Preferably, one or both sides of the gap are profiled to promote turbulent flow, for example by means of baffles projecting into the gap. Preferably the pump 3, or other means for providing water at pressure at the inlet 24,is controlled to provide a minimum flow rate through the flow path 28 and/or 50 to promote turbulent flow and avoid laminar flow.

The resistance per unit length of the flow path constituting the depressurising means may progressively decrease along the flow path, for example by progressively increasing the cross-sectional area or pitch of the flow path. Where the flow path comprises a narrow gap, the width of the gap may increase along the flow path, for example by tapering the sleeve 42, inner body 40 and/or central body 46.

### Flow-through heater for superheating steam

In further embodiment (not illustrated), pressurized steam is provided to the inlet of the flow-through heater, which superheats the steam to produce superheated steam at the outlet. WO 2008/139205 A2, in which this application is based, discloses a flow-through heater for superheating steam.

### Set-up

In the above embodiments, the controller may be programmed to perform an initial set up procedure to determine the limits of the operating parameters of the apparatus, given the conditions of operation such as altitude and/or liquid type and/or type of the outlet 9 where this is interchangeable. For example, the controller may vary the power of the heater 4 and/or the flow rate of the pump 3 and/or the pressure drop of the depressurising means 22 and/or the pressure of the steam generator 80 during a test dispensing operation, while reading the temperature at the outlet 23 and optionally at the outlet 9 and thereby determine operating limits beyond which the liquid will start to boil within the heater 4 and/or within the depressurising means 22, the latter applying if the apparatus is not intended to dispense steam or gas. The controller then applies corresponding limits to the operating parameters during subsequent dispensing operations to ensure that the liquid will not start to boil within the heater 4 and/or within the depressurising means 22. The temperature at the outlet 9 may be sensed by a sensor such as an NTC thermistor.

The set up procedure may be rerun periodically, or in response to a detected change in conditions of operation, to ensure that the unit operates optimally for the current conditions.

Alternatively or additionally, the apparatus may include alternative means for sensing steam at the outlet 23 and/or the outlet 9.

### User Variable Operation

The appliance may be arranged to dispense boiling water or water at one or more sub-boiling temperature, according to a selection by the user. For example, the power output of the heater 4 and/or the flow rate of the pump 3 and/or the pressure drop of the depressurising means 22 may be controlled by the controller so as to dispense water at the desired temperature.

The depressurising means 22 may be controlled so as to vary the pressure drop, for example so that for higher flow rates and/or lower temperatures the pressure is reduced and for lower flow rates and/or higher temperatures the pressure is increased. In the first embodiment described above, the depressurising means 22 may comprise an adjustable valve or nozzle. In the subsequent embodiments, the resistance of the unheated flow path may be varied, for example by varying the length by switching out one or more sections, or by switching between a series and a parallel arrangement.

Alternatively or additionally, there may be provided a mixer that mixes liquid heated by the heater 4 or cooled by the chiller 5 with liquid taken directly from the reservoir 1 without heating or chilling. In this way, liquid may be dispensed at the desired temperature without the need to control the rate of heating or cooling of the liquid. The mixer may be controlled manually, or automatically by the controller to achieve the desired temperature.

In one example, an appliance may be arranged to dispense water at a selected one of a plurality of temperatures, such as 100°C for brewing tea, 90°C for brewing 'pod' type coffees, 80°C for instant coffee or for brewing coffee, 60°C for instant porridge, 40°C for baby milk, 10 °C for cooled water etc.

The flow rate may also be varied by the user so as to control the strength of the beverage being brewed. This is particularly important for brewing coffee, where the strength of the brewed coffee is dependent on the flow rate of water through the coffee grounds.

### Applications

The flow-through heater arrangements described above may be used in many different types of appliance, including those described above with reference to Figures 1 to 9. Although the embodiments have been described above primarily in the context of heating water, at least some of the embodiments may be applied to the heating of other liquids, such as oil in a fryer, solvent in a cleaning appliance, or liquids that are required to be dispensed in industrial processes at or close to boiling. The same appliance may be designed to heat any one of a plurality of different liquids, with the temperature at the outlet 25 of the heater 4 and/or the pressure difference of the depressurising means 22 being selectable according to the type of liquid to be dispensed. Examples of appliances in which embodiments of the invention may be incorporated include on-demand tea makers or coffee makers, including high-pressure (9 bar or more) espresso makers such as those currently sold under the Nespresso® brand, low pressure (2-5 bar) coffee makers such as those sold under the Tassimo® brand, 'teawakers' such as sold under the Teasmade® brand, water dispensers beverage vending machines, water dispensers, dishwashers and the like.

The flow-through heater 4 and optionally the depressurising means 22 may be provided as a modular unit, to which various different types of reservoir 1 and/or outlet 9 are connectable for different applications, for example as described herein. The different types of reservoir may include means to indicate to the unit what type of liquid they contain. The pump 3 or other pressurizing means may be provided within the modular unit, or may be provided separately. Examples include a steam-generating unit interchangeably connectable to a wallpaper stripper or steam iron attachment as the outlet 9.

The modular unit may comprise additional components as well as the heater 4 and the pump 3, such as one or more control circuits, pressure relief valves, bypass valves, flow regulators, thermistors etc, so that the modular unit may easily be incorporated in an appliance while requiring a minimum amount of further development by the appliance manufacturer.

Alternatively, flow-through heater units may be provided as modules that can be combined in series and/or parallel to provide for example, higher power flow-through heating appliances or better temperature control.. An arrangement of multiple flow-through heater units in parallel is particularly advantageous, in that each of the modular units may be provided with a separate power supply drawing for example 2-3 kW and allowing only a slow flow rate, but the flow rates of the units may be combined at the outlet 9 to provide a high flow rate. In one embodiment each individual unit may comprise at least a flow-through heater 4 and pump 3, and optionally depressurising means 22, but other components such as the reservoir 1 and outlet 9 may be shared between the different units.

In another embodiment one pump 3 supplies the flow for all the units, and power may be selectively switched to one or more of the units, to control the output temperature.

The modules could each be small low-power units (e.g. 200 watts) to achieve a total output of 2 - 3 kW. Alternatively each module could be a high power (2-3kW) unit, in which case the total output would be significantly larger, for example 21 kW, suitable for point of use water heaters.

The individual modules could use any suitable type of heating means, for example a tube incorporating a thick film printed track or alternatively a complete flow-through heater assembly, for example as shown in Figure 14. Appliances according to embodiments of the invention may provide steam either as a primary function, such as a steam cleaner or as a secondary function, such as a steam milk frother for making cappuccino coffee. Appliances may have the option to dispense hot water or steam, either through the same outlet or through different outlets 9.

Other appliances that may incorporate the embodiments that dispense steam or other gas include wallpaper strippers, steam irons, water purifiers, food steamers, dishwashers, floor cleaner, carpet, curtain or furniture cleaners and sterilization equipment for medical, dentistry or food sterilisation applications. The appliance may be portable, or form part of a domestic, industrial, commercial or laboratory processing unit.

An embodiment that generates steam at the outlet 9 may be used to generate steam in a Turkish bath or installed into a sauna to ensure the correct humidity. Alternative applications include a steam generator for a microwave or standard ovens and a stand-alone food steamer. The steam generator may collect and recirculate condensed water for generating more steam. In some cooking applications, the appliance may spray hot or boiling water onto the food, rather than steam.

The sixth embodiment, in which superheated steam is generated, is particularly suitable for cooking, as the superheated steam rapidly conducts heat onto the food to be cooked. As the steam is superheated, there is little condensation on the food, so that the embodiment is applicable to 'dry frying', where food is cooked rapidly at high temperature without fat or oil, thus providing a healthy alternative to fried food. Superheated steam is also particularly applicable to sterilizing, degreasing and cleaning applications.

A portable appliance in an embodiment of the invention may include a small reservoir 1 containing liquid that is heated by recirculation through the flow-through heater 4, as described above. Such an appliance may have a low power rating, such as 500 W, and operate at 12 or 24 Volts for use in a car, truck or boat, without a voltage converter.

The portable appliance may include or be connectable to a reservoir containing premixed beverage, as described above. The reservoir may comprise a bottle having a standardised opening or connector for connection to the portable appliance. The liquid may be heated by recirculation, or by passing steam through the reservoir, generated from a separate water reservoir. The need for the pump 3 may be avoided by providing an arrangement for raising the reservoir 1 so as to pressurise the liquid, for example using a portable stand.

The above embodiments illustrate, but do not limit, the present invention. Alternative embodiments which may occur to the skilled reader on reading the above description may also fall within the scope of the invention.

## Claims

1. A flow-through liquid heating apparatus comprising:
a. a heated flow path arranged to heat liquid flowing therethrough
b. and depressurising means downstream of the heated flow path for causing a pressure difference between liquid flowing through the heated flow path and liquid leaving the depressurising means, such that the liquid leaves the depressurising means at or above boiling point, but is substantially prevented from boiling within the heated flow path.

2. Apparatus according to claim 1, including pressurizing means for pressurizing the liquid prior to flowing through the heated flow path.

3. Apparatus according to claim 1 or claim 2, including control means for controlling the apparatus such that the liquid leaves the depressurising means substantially at a predetermined desired temperature.

4. Apparatus according to claim 3, including a sensor arranged to sense the temperature of the liquid leaving the heated flow path, the control means being arranged to maintain the sensed temperature substantially at a predetermined level, and optionally wherein said predetermined level is selectable by a user.

5. Apparatus according to any one of claims 3 to 4, each when dependent on claim 2, wherein the control means is arranged to control the pressurizing means.

6. Apparatus according to any one of claims 3 to 5, wherein the control means is arranged to control the flow rate of the liquid, the heating level of the heated flow path and/or the depressurising means, and/or wherein the control means is arranged to perform an initial dispensing operation so as to determine a limit to the operating parameters for a subsequent dispensing operation, or to perform an initial dispensing operation in response to a change in operating conditions of the apparatus.

7. Apparatus according to any one of claims 1 to 6, wherein the depressurising means comprises a high-resistance component such as a valve, a nozzle, a filter or a beverage ingredient, and/or wherein the depressurising means comprises a substantially unheated flow path, which is optionally integrated with the heated flow path.

8. Apparatus according to claim 7, wherein the heated flow path and the unheated flow path comprise first and second portions of an elongate flow path; and optionally wherein the first portion is in thermal contact with a heated portion of an element plate; and optionally wherein the second portion is thermally isolated from the heated portion of the element plate; and optionally wherein the second portion is displaced from the element plate.

9. Apparatus according to claim 8, wherein the first and/or second portion is substantially planar and/or is arranged in a spiral.

10. Apparatus according to claim 8, wherein the first and/or second portion is substantially cylindrical.

11. Apparatus according to claim 10, wherein the first and/or second portion is substantially helical, and each portion comprises a helical flow path, and optionally wherein the helical flow path is arranged between an inner cylinder and an outer sleeve, and a heater is provided on the outer sleeve adjacent the first portion.

12. Apparatus according to claim 10, wherein the second portion is substantially helical and arranged substantially within the first portion.

13. Apparatus according to any one of claims 7 to 12, wherein the unheated flow path comprises a dispensing outlet.

14. Apparatus according to any one of claims 1 to 13, wherein the depressurising means is switchable out of the flow path, and optionally wherein the control means of claim 3 is arranged to switch the depressurising means out of the flow path, and/or optionally wherein the control means is arranged to ensure that liquid leaves the heated flow path at a predetermined desired temperature when the depressurising means is switched out of the flow path, the apparatus optionally including a filter for preventing or reducing deposit from the liquid within the flow path.

15. A method of operating the apparatus of any one of claims 3 to 6, or any one of claims 7 to 14 when dependent on claim 3, comprising controlling the apparatus such that the liquid leaves the depressurising means substantially at a predetermined desired temperature, and optionally comprising performing said initial dispensing operation of claim 6.
